# EUROPÄISCHE PATENTSCHRIFT

(11) **EP 3 042 167 B1**
(45) Veröffentlichungstag und Bekanntmachung des Hinweises auf die Patenterteilung: **01.08.2018**
(21) Anmeldenummer: 13821054.7
(22) Anmeldetag: 21.10.2013
(51) Int. Cl.: G01J 5/10, G01J 1/46, G08B 13/191, H03M 3/00

(54) **VORRICHTUNG ZUM BETREIBEN PASSIVER INFRAROTSENSOREN**
METHOD OF OPERATION OF PASSIVE INFRARED SENSORS
PROCÉDÉ POUR LE FONCTIONNEMENT D'UN DÉTECTEUR INFRAROUGE

(30) Priorität: 05.09.2013 DE 102013014810
(43) Veröffentlichungstag der Anmeldung: 13.07.2016
(60) Teilanmeldung: 16192805.6
(73) Patentinhaber: Elmos Semiconductor Aktiengesellschaft, 44227 Dortmund (DE)
(72) Erfinder: SUNTKEN, Artur, Waterkloof Glen ZA-0181 (ZA)
(74) Vertreter: dompatent von Kreisler Selting Werner - Partnerschaft von Patent- und Rechtsanwälten mbB
(86) Internationale Anmeldenummer: PCT/DE2013/000624
(87) Internationale Veröffentlichungsnummer: WO 2015/032373

(56) Entgegenhaltungen:
- EP-A2- 1 249 684
- WO-A2-2004/090570
- WO-A2-2007/057179
- AT-A2- 511 664
- JP-A- 2003 163 546
- JP-A- 2012 013 578
- US-A- 4 377 808
- US-A- 4 825 079
- US-A1- 2006 187 097
- US-A1- 2010 259 322
- US-A1- 2011 260 629
- US-A1- 2012 068 686
- US-A1- 2013 082 179
- US-B1- 7 242 332
- "X9313 Digitally-Controlled (XDCP) Potentiometer", INTERNET CITATION, 8. November 1999 (1999-11-08), XP002233019, Gefunden im Internet: URL:http://www.xicor-forum.com/offsite.php 3?link=/sites/xicor/resources/x9313.pdf [gefunden am 2003-02-27]

## Beschreibung

Für die Messung von Infrarot-Strahlung sind verschiedene Verfahren bekannt. Ein wesentliches Sensorprinzip ist die Verwendung von passiven Infrarot-Detektoren (PIR-Detektoren).

Diese zeichnen sich durch eine einfache und kostengünstige Herstellung aus.

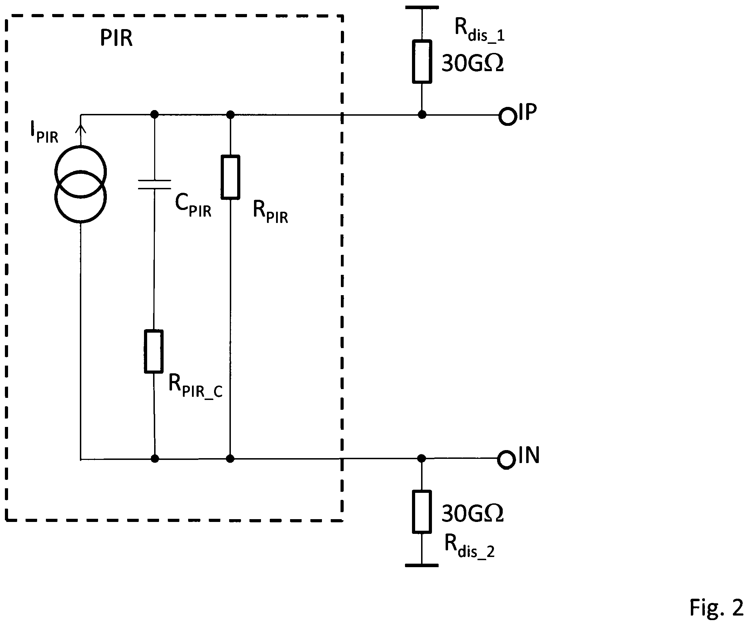

Solche PIR-Detektoren sind Zweipole und können im Ersatzschaltbild durch eine Stromquelle symbolisiert werden, die einen Strom I_{PIR} abhängig von der Änderung der Bestrahlung und damit der Temperatur liefert und der eine Kapazität C_{PIR} parallel geschaltet ist. (Siehe auch Figur 2).

Bei der Auswertung des Signals eines PIR-Sensors treten nun verschiedene Probleme auf:
Zum einen kommt es zu einer Verschiebung des Arbeitspunkts des PIR-Detektors durch eine Selbstaufladung. Zum anderen liefert die Stromquelle I_{PIR} in der Regel nur einen sehr geringen Strom bei einem relativ hohen Innenwiderstand. Dieser Innenwiderstand R_{PIR} ist in Figur 2 gezeigt. Diese Randbedingungen resultieren in der Forderung nach einem großen Dynamikbereich und einem sehr hohen Innenwiderstand für die nachfolgende Verstärker- und Analog-zu-Digital-WandlerSchaltung (Auswerteschaltung).

Durch den hohen Innenwiderstand einer optimalen Auswerteschaltung, können einmal generierte Ladungen jedoch nicht mehr abfließen. Dies kann dazu führen, dass die Schaltung den Arbeitsbereich der Auswerteschaltung verlässt, da diese übersteuert wird.

In US-A-4 377 808 ist der Betrieb eines zweipoligen passiven Infrarot-Detektors beschrieben, wobei jeder der Ausgänge des passiven Infrarot-Detektors mit dem Steuereingang jeweils eines zugeordneten Eingangstransistors verbunden ist, jeweils je ein Kontakt jedes dieser Eingangstransistoren mit einem zugehörigen Stromteilerausgang eines steuerbaren Stromteilers verbunden ist und der Stromteiler den Strom einer Referenzstromquelle in Abhängigkeit von einem Steuereingang auf die Stromteilerausgänge aufteilt, wobei Ausgangswerte an anderen Kontakten der Transistoren durch mindestens einen Komparator miteinander verglichen werden.

US-B-7 242 332 offenbart eine Analog-zu-Digital-Umsetzung bei einem zweipoligen passiven Infrarot-Detektor an einem differentiellen Verstärker mit steuerbarer Stromquelle, wobei das Ausgangssignal eines Komparators als Eingangssignal einem digitalen integrierenden Filter zugeführt wird.

WO-A-2004/090570 beschreibt eine alternative Ausgestaltung für eine Analog-zu-Digital-Umsetzung bei einem zweipoligen passiven Infrarot-Detektor, wobei ein integrierendes Filter zwischen den beiden Anschlüssen und einem Komparator geschaltet ist, dessen Ausgangssignal als Eingangssignal einem digitalen integrierenden Filter zugeführt wird.

### Aufgabe der Erfindung

Es ist die Aufgabe der Erfindung, ein Auswerteverfahren und eine hochohmige Messschaltung mit großem Dynamikbereich für die Auswertung des Signals eines PIR-Detektor bereitzustellen, ohne dass es zu einer Übersteuerung durch die Aufladung der Eingänge der PIR-Detektor-Auswerteschaltung kommen kann. Dabei soll die Stromaufnahme minimiert werden.

Diese Aufgabe wird durch eine Vorrichtung nach Anspruch 1 gelöst. Einzelne Ausgestaltungen der Erfindung sind Gegenstand der Unteransprüche.

### Beschreibung der Erfindung

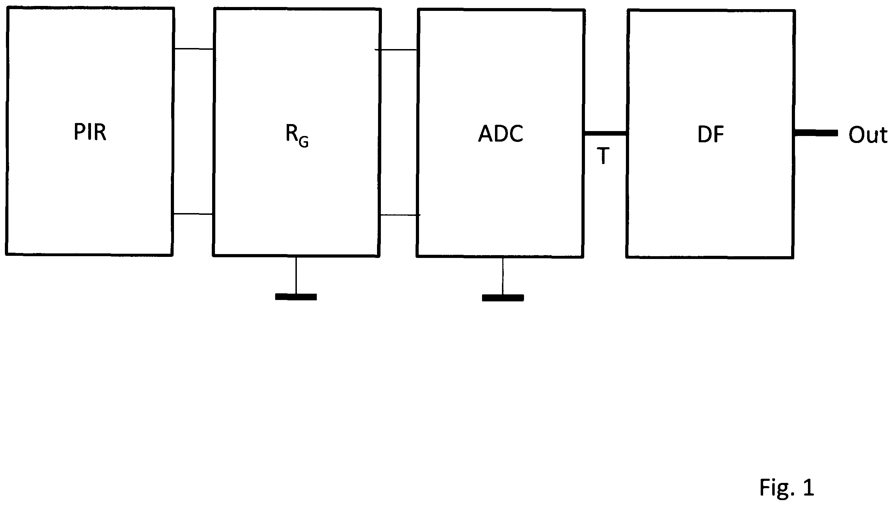

Das erfindungsgemäße System ist in Figur 1 dargestellt. Der passive Infrarot-Detektor (PIR) ist mit seinen zwei Anschlussleitungen an ein Entladenetzwerk R_{G} angeschlossen. Dieses wiederum ist mit einem Analog-zu-Digital-Wandler (ADC - nachfolgend Wandler genannt) verbunden. Der Ausgang des Wandlers ist über einen ersten Bus (T) mit einer ersten Busbreite mit einem digitalen Filter (DF) verbunden, dessen Ausgang Out typischerweise eine größere zweite Busbreite als die erste Busbreite aufweist.

Bei der Entwicklung der erfindungsgemäßen Vorrichtung zum Betreiben eines passiven Infrarot-Detektors (PIR) wurde erkannt, dass die Aufladung der Eingänge ein wesentlicher Hinderungsgrund für einen korrekten Betrieb des Systems darstellt. Wie später noch weiter erläutert werden wird, ist der Wandler (ADC) gegen solche Arbeitspunkt-Drift empfindlich. Diese erhöhte Empfindlichkeit des Wandlers (ADC) ermöglicht jedoch eine besonders effiziente Unterdrückung der Quantisierungsfehler durch den Komparator des Wandlers (ADC). Daher bilden der Wandler und die Entladung des passiven Infrarot-Detektors mittels des Entladungsnetzwerks (R_{G}) eine Einheit. Basierend auf dieser besagten erfinderischen Erkenntnis der fehlerhaften Aufladung der Eingänge, kann die einfachste Lösung dieses Problems dadurch erreicht werden, dass die Eingangsknoten mittels eines Schalters entladen werden, wenn die Spannung am Detektor den Dynamikbereich erreicht. In diesem Fall kann während der Entladung und kurz danach keine Bewertung der Spannung am Detektor vorgenommen werden. Alternativ kann die Entladung durch einen Ableitwiderstand zwischen den Anschlüssen des Sensors oder von den Anschlüssen nach Bezugsmasse (R_{dis_1}, R_{dis_2}) erfolgen. Ein wesentlicher Nachteil dieser Lösung sind die kontinuierliche Bedämpfung des Signals und das Eigenrauschen des Detektors. Außerdem lässt sich nicht mit vertretbarem Aufwand ein Giga-Ohm Widerstand in Low-Cost-CMOS-Technologie realisieren. Im Rahmen der Erfindung wurde erkannt, dass die Entladung des zweiten Ausgangs über den Innenwiderstand der Stromquelle des PIR-Sensors (PIR) nicht zu befriedigenden Ergebnissen führt. Es hat sich gezeigt, dass der Widerstandswert dieser Ableitwiderstände größer als 1MOhm, vorzugsweise größer als 10 MOhm, vorzugsweise größer als 100 MOhm, und vorzugsweise größer als 1 GOhm oder vorzugsweise größer als 10 GOhm sein sollte. Hierbei hängt der optimale Wert des Ableitwiderstands von dem jeweiligen PIR-Detektor und der jeweiligen Applikation ab und sollte von Fall zu Fall angepasst werden. Bei großen Ladungsverschiebungen durch schnelle Temperaturänderungen (Temperaturschock) wären unverhältnismäßig niedrige Ableitwiderstandswerte nötig, die das zu detektierende Signal nahezu eliminieren.

Hierbei ist klar, dass die Ableitwiderstände des Entladenetzwerks (R_{G}) vorzugsweise gleich und möglichst symmetrisch, in der Fachsprache "matchend", ausgeführt werden sollten. Dabei können diese Ableitwiderstände auch komplexere Schaltungen sein, die nur unter anderem auch die Funktion eines Ableitwiderstands wahrnehmen. Im Rahmen der Erfindung wurde es als vorteilhaft erkannt, die Ableitwiderstände zumindest teilweise als Switched-Capacitor-Schaltung auszuführen. Mit solchen Schaltungen können die ggf. erforderlichen relativ hochohmigen Ableitwiderstände relativ einfach ausgeführt werden. Für den Betrieb eines solchen Switched-Capacitor-Netzwerkes ist es besonders vorteilhaft, wenn dieses Netzwerk mit einem nichtüberlappenden Zweiphasentakt betrieben werden. Natürlich können auch Einphasen- und Mehrphasentakte verwendet werden, die aber in der Regel aufwendiger zu realisieren sind.

Die Anforderung der zuverlässigen Entladung des PIR-Detektors steht im Gegensatz zu einem möglichst hohen Eingangswiderstand der Auswerteschaltung. Im Rahmen der Erfindung wurde daher erkannt, dass es sinnvoll ist, den mittlere Äquivalentwiderstand zumindest der Entladewiderstände des passiven Infrarot-Detektors davon abhängig zu machen, ob gerade eine Messung des Infrarot-Strahlungspotenzials mittels des passiven Infrarotsensors (PIR-Detektor) durchgeführt wird oder nicht. Vor einer Messung werden die Entladewiderstände in einen sehr hochohmigen Zustand geschaltet (Messzustand). Nach dem Ende der Messung werden die Entladewiderstände in einen Zustand geschaltet, der gegenüber dem Messzustand niederohmiger ist.

Alternativ kann die Messung des Ladezustands (Spannung am Detektor) erfolgen und die Größe der Entladewiderstände in Abhängigkeit vom Ladezustand nachgeregelt werden.

Denkbar ist es, dass andere Betriebsbedingungen ebenfalls ein Umschalten erfordern. Beispielsweise ist es denkbar, den PIR-Detektor über einen Schalter definiert zu entladen. In einem solchen Modus wäre ebenfalls ein Hochohmigschalten der Entladewiderstände sinnvoll. Im Extremfall kann der Messzustand also ein komplettes Abkoppeln eines Entladewiderstands bedeuten.

Die Widerstandswerte sind dabei immer an Mittelwerten über mehrere Takte des Betriebstaktes des jeweiligen Switched-Capacitor-Netzwerkes orientiert, sofern ein solches für die Realisierung der Entladewiderstände verwendet wird. Es ist also ein wesentlicher erfinderischer Gedanke, dass die Entladewiderstände des PIR-Detektors in Abhängigkeit von Zuständen des Sensorsystems unterschiedliche Werte annehmen, wobei mindestens die Zustände Messung und keine Messung/Entladung realisiert werden sollten.

Der Wandler (ADC) besteht unter anderem aus einem Differenzverstärker, dessen Stromquelle nicht, wie bei normalen Differenzverstärkern üblich, auf zwei Äste bei symmetrischer Ansteuerung der Transistoren des Differenzverstärkers symmetrisch aufgeteilt ist, sondern der statt des normalerweise vorhandenen gemeinsamen Kontenpunktes für die Transistoren in den Zweigen des Differenzverstärkers und der Betriebsstromquelle einen Stromteiler aufweist, der den Strom in Abhängigkeit von einem externen Steuerwert unterschiedlich aufteilt. Dabei kann angenommen werden, dass die Betriebsstromquelle einen endlichen Innenwiderstand aufweist. Insofern ist auch die Verwendung einer realen Spannungsquelle möglich. Dieser Stromteiler wird in der erfindungsgemäßen Vorrichtung durch eine Widerstandskette realisiert, die an dem einen Ende mit einem Transistor des Differenzverstärkers und an dem anderen Ende mit dem anderen Transistor des Differenzverstärkers verbunden ist. Ein Multiplexer verbindet nun die Betriebsstromquelle in Abhängigkeit von dem externen Steuerwert mit einem Knoten dieser Widerstandskette. Der Stromteiler verhält sich also wie ein digital gesteuertes Potentiometer, dessen Abgriff durch den externen Parameter eingestellt wird.

Hierdurch wird eine unterschiedliche Stromgegenkopplung für die verschiedenen Zweige des Differenzverstärkers eingestellt. Die Stromaufteilung erfolgt dabei derart, dass die Gate-Source-Spannungen der Transistoren sich durch den Spannungsabfall über den Widerständen des Stromteilers so einstellen, dass die Stromsumme durch die beiden Zweige dem dem Strom der Betriebsstromquelle entspricht. Die anderen Anschlüsse der Transistoren sind mit je einem Arbeitswiderstand verbunden. Es hat sich als besonders vorteilhaft herausgestellt, wenn diese Arbeitswiderstände als reale Stromquellen ausgeführt werden, da dann der differentielle Arbeitswiderstand und damit die differentielle Verstärkung besonders groß sind.

Parallel zu diesen Arbeitswiderständen können Kapazitäten geschaltet sein, die das Ausgangssignal integrieren. Die Verwendung von Miller-Kapazitäten ist ebenfalls denkbar. Im Falle des Wandlers (ADC) führen diese Kapazitäten die summierende Funktion des Wandlers (ADC) durch und eliminieren damit den Quantisierungsfehler durch einen nachgeschalteten Komparator.

Für das Betreiben eines passiven Infrarot-Detektors bietet sich folgendes Schaltungskonzept an:
Jeder der Ausgänge des besagten passiven Infrarot-Detektors ist mit dem Steuereingang jeweils eines zugeordneten Eingangstransistors des beschriebenen Differenzverstärkers verbunden. Dabei ist jeweils ein Kontakt jedes dieser Eingangstransistoren mit einem zugehörigen Stromteilerausgang eines steuerbaren Stromteilers verbunden. Der besagte Stromteiler verteilt den Strom einer Referenzstromquelle (I_{ref}) in Abhängigkeit von einem Steuereingang auf die Stromteilerausgänge auf. Die anderen Kontakte der Transistoren sind jeweils mit je einem Arbeitswiderstand, vorzugsweise einem integrierenden Filter oder einer Kapazität (C₁, C₂) verbunden. Die Ausgangswerte dieser integrierenden Filter, d. h. die Arbeitswiderstände und die Kapazitäten, werden nun durch mindestens einen Komparator miteinander verglichen. Dieser erzeugt einen unvermeidlichen Quantisierungsfehler, der durch die im Folgenden beschriebene Rückkopplung minimiert wird. Das Komparatorausgangssignal dieses Komparators ist mit einem digitalen integrierenden Filter verbunden, das neben den besagten Kapazitäten eine zweite Integration durchführt. Der Steuereingang des besagten Stromteilers, der den Strom einer Betriebsstromquelle aufteilt, ist mit dem Ausgang des digitalen integrierenden Filters verbunden. Wird der Stromteiler analog gesteuert, so ist ein Digital-zu-Analog-Wandler (DAC) und/oder ein Signalformatwandler erforderlich, der das Ausgangssignal des digitalen integrierenden Filters in ein geeignetes Format wandelt. In dem hier beschriebenen Beispiel ist dies jedoch nicht erforderlich, da der Multiplexer digital angesteuert werden kann.

Ähnliches kann bei der Anpassung eines digitalen Steuereingangs für den Stromteiler an den digitalen Ausgang des digitalen integrierenden Filters erforderlich sein.

Neben dieser zweiphasigen Version kann auch eine einphasige Version einer Auswerteschaltung Verwendung finden. Hierbei steuert ein Ausgang des passiven Infrarot-Detektors mindestens eine zweite Stromquelle. Diese zweite Stromquelle speist Strom in einen ersten Konten (S_{b}) ein. Dieser erste Knoten (S_{b}) ist über ein integrierendes Filter mit dem Eingang eines Komparators verbunden, der den Signalpegel dieses ersten Knotens (S_{b}) mit einem internen Pegel vergleicht. Der Ausgang dieses Komparators ist wieder mit dem besagten digitalen integrierenden Filter direkt oder indirekt verbunden und steuert dieses somit an. Der Ausgang dieses digitalen integrierenden Filters steuert einen Digital-zu-Analog-Wandler (DAC) an. Der Ausgang dieses Digital-zu-Analog-Wandlers steuert eine erste Stromquelle (I₁), die wiederum ihren Strom ebenfalls in den ersten Knoten (S_{b}) einspeist.

Im Unterschied zur vorausgehenden Version wird in dieser Version ein Anschluss des passiven Infrarot-Detektors mit Masse verbunden, während der andere Anschluss an die zuvor beschriebene Auswerteschaltung angeschlossen wird. Eine solche Schaltung ist auch für die Auswertung von Thermopiles geeignet.

Für beide Verfahren ist es vorteilhaft, wenn das digitale integrierende Filter als ein Aufwärts-/Abwärtszähler realisiert wird, der in Messphasen in einem vorgegebenen oder programmierbaren Takt zählt. Die Zählrichtung wird dabei vorzugsweise durch den Ausgang des Komparators festgelegt. Auch die Schrittweite dieser Zählung und die zeitlichen Abstände, in denen eine Zählung erfolgt, können konstant und vorgegeben oder programmierbar sein. In manchen Anwendungsfällen hat es sich bewährt, die Schrittweite der Zählung vom Zählerstand selbst abhängig zu machen, um ein Über- oder Unterlaufen und damit eine totale Funktionsuntüchtigkeit zu vermeiden.

Überschreitet der Zählerstand einen kritischen oberen Wert, so kann dies beispielsweise detektiert werden und ein Verlassen des Messzustands und ein Aktivieren des Entladezustands des Detektorelementes bewirken. Dies ist insbesondere bei der einphasigen Variante sinnvoll, da diese in der Lage ist, den absoluten Pegel eines Eingangssignals zu messen. Der Ausgang des digitalen integrierenden Filters stellt den Messwert dar.

In jedem Fall ist es jedoch noch zweckmäßig, dem digitalen integrierenden Filter ein weiteres digitales Filter (DF) nachzuordnen, bevor der Messwert Verwendung findet. Dies unterdrückt die Quantisierungsfehler ab einer Grenzfrequenz.

Es kann gezeigt werden, dass der Quantisierungsfehler bei einer Frequenz von 0Hz im Störspektrum null wird und für unendlich hohe Frequenzen gegen einen endlichen Wert strebt. Die Grenzfrequenzen hängen dabei wesentlich von den besagten Lastkapazitäten (C₁, C₂) und dem Widerstand (R_{M}) des Stromteilers ab und können damit gut eingestellt werden.

Selbstverständlich ist es sinnvoll, wesentliche Teile dieses Verfahrens in einem Signalprozessor ablaufen zulassen. Nur die Eingangsstufen dürften dann in speziell ausgeführter Elektronik erstellt werden. Eine solche Vorrichtung ist dann in der Lage, das oben beschriebene Verfahren durchzuführen.

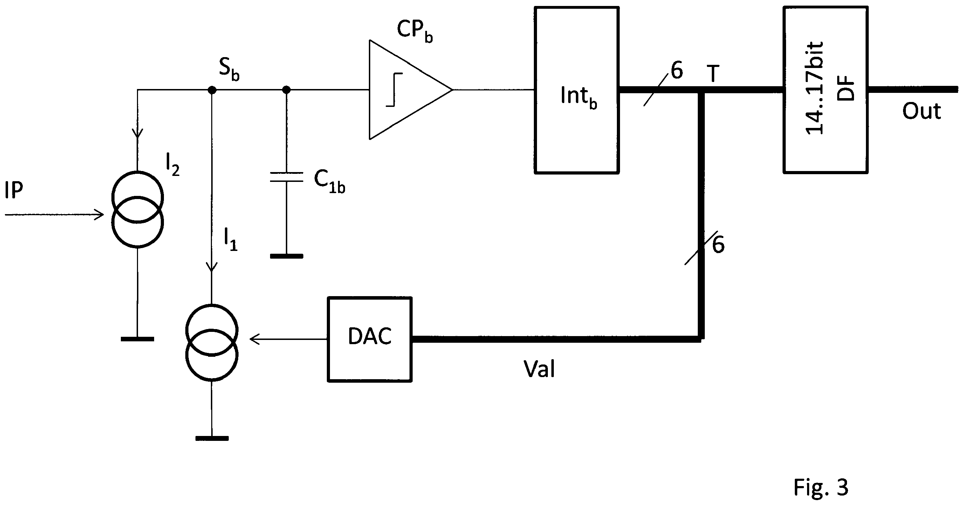

Im Folgenden wird die Erfindung anhand der beiliegenden Figuren erläutert, wobei die Ausführungsbeispiele der Fign. 3, 4 und 7 nicht zum Gegenstand der Erfindung gehören:
Figur 1 zeigt die grundsätzlichen Blöcke einer erfindungsgemäßen Vorrichtung eines passiven Infrarot-Detektors. Die Vorrichtung besteht aus einem passiven Infrarot-Detektor (PIR), der mit dem Entladenetzwerk R_{G} gekoppelt ist. Die Aufgabe dieses Entladenetzwerks ist es, Aufladungen des PIR-Detektors zu beseitigen und den PIR-Detektor in einem für den nachfolgenden Analog-zu-Digital-Wandler günstigen Arbeitspunkt zu halten, ohne die Dynamik des Systems zu belasten. Der Analog-zu-Digital-Wandler wandelt das Signal des Entladenetzwerks in ein erstes digitales Signal auf einem Bus T mit einer ersten Busbreite (Anzahl Bits) um. Ein nachfolgendes digitales Filter (DF) filtert das Signal auf dem ersten Bus T und gibt über einen Ausgangsbus (Out) die Daten mit einer größeren Auflösung aus. Daher besitzt der Ausgangsbus Out typischerweise eine größere Busbreite als der erste Bus T.
Figur 2 zeigt das nicht beanspruchte Ersatzschaltbild eines passiven Infrarot-Detektors (PIR) mit Ersatzstromquelle (I_{PIR}) und einer Serienschaltung von parasitärem Detektorkapazität (C_{PIR}) und zugehörigem Verlustwiderstand R_{PIR_C} sowie den Innenwiderstand der Ersatzstromquelle (R_{PIR}). Dieser Innenwiderstand der Stromquelle (R_{PIR}) liegt parallel zur Stromquelle (I_{PIR}) und ist typischerweise sehr hoch. Eine zu große Belastung des Detektors lässt daher die Ausgangsspannung zusammenbrechen.
Figur 3 zeigt eine einphasige Version des Analog-zu-Digital-Wandlers (ADC) aus Figur 1. Eine erste gesteuerte Stromquelle (I₁) (auch als weitere Stromquelle bezeichnet) wird durch den Rückkoppelpfad gesteuert und speist in den ersten Knoten (Sb) ein. Eine zweite gesteuerte Stromquelle (I₂) (auch als Stromquelle bezeichnet) wird durch einen Ausgang des passiven Infrarot-Detektors gesteuert und speist ebenfalls in den ersten Knoten (S_{b}) ein. Die Summe der beiden Stromquellenströme lädt eine Kapazität (C_{1b}) auf oder entläd diese. Ist der Regelkreis stabil, so liefert die zweite Stromquelle (I₂) im Vergleich zur ersten _Stromquelle (I₁) einen im Vorzeichen unterschiedlichen, jedoch betragsgleichen Strom. Der Komparator (CP_{b}) ist mit seinem Eingang mit diesem Kondensator (C_{1b}) verbunden und vergleicht den Spannungswert an diesem Kondensator und damit am ersten Knoten (S_{b}) mit einem internen Vergleichswert. Der Auf-/Abzähler (Int_{b}) zählt nun in diesem Beispiel mit jedem Systemtakt entweder um eins aufwärts oder um ein abwärts, und zwar je nachdem, ob der Eingang des Komparators (CP_{b}) über oder unter der Schaltschwelle des Komparators (CP_{b}) liegt. Sechs Bit des Zählerstandes des Auf- / Abzählers (Int_{b}) werden beispielsweise für die Rückkopplung verwendet. In diesem Beispiel werden diese sechs Bit durch einen Digital-zu-Analog-Wandler (DAC) in ein analoges Signal gewandelt, das die weitere Stromquelle (I₁) steuert.
   Ein digitales Filter (DF) filtert den Zählerstand des Auf-Ab-Zählers (Int_{b}) zum Ausgangssignal (Out), welches der Ausgangsbus des digitalen Filters (DF) ist.

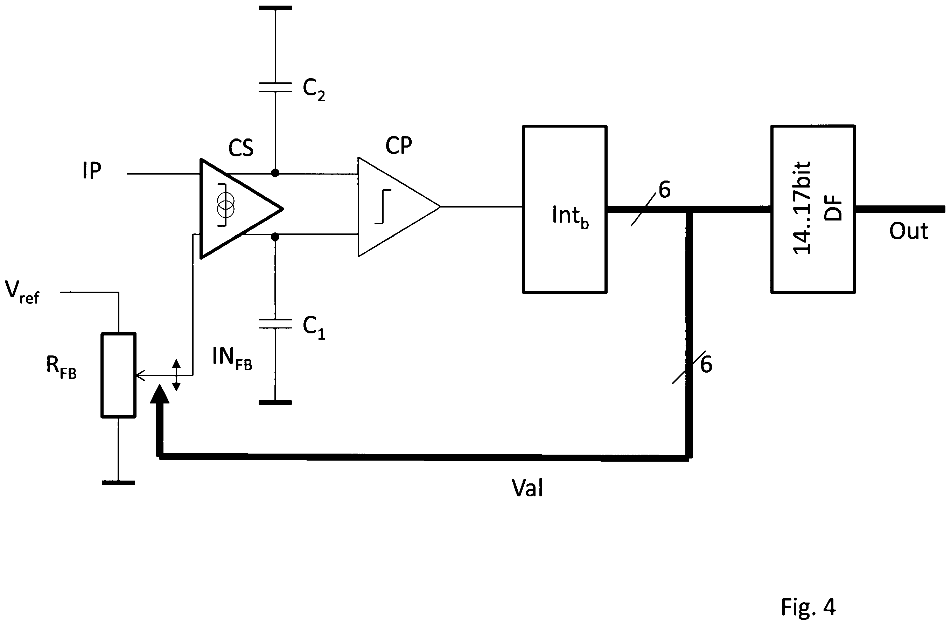

Figur 4 zeigt ebenfalls eine einphasige Version des Analog-zu-Digital-Wandlers (ADC) aus Figur 1. Allerdings ist anstelle der steuerbaren Stromquelle die eine Quelle des einen Bezugssignals nun so realisiert, dass der Zählerstand (Val) des Auf-/Abzählers (Int_{b}) nun den Abgriff (IN_{FB}) an einer Widerstandskaskade (R_{FB}) aus einzelnen Widerständen (nicht gezeichnet) steuert. Dieser Abgriff kann dann einem Differenz-Transconduktanz-Verstärker mit Stromausgang (CS) zugeführt werden. Die Stromausgänge laden und entladen jeweils einen Kondensator (C₁, C₂). Die dabei auftretenden Spannungen an den Kondensatoren (C₁, C₂) werden durch einen Komparator (CP) miteinander verglichen, der wiederum den Auf-/Abzähler (Int_{b}) steuert.

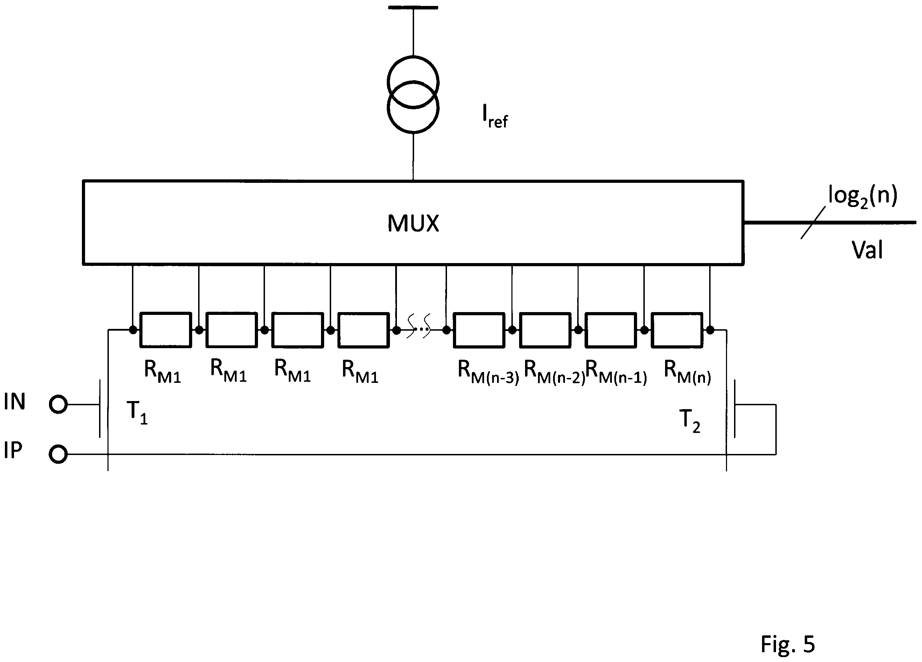

Figur 5 zeigt einen steuerbaren Stromteiler als Teil einer erfindungsgemäßen Differenzstufe bestehend aus der Widerstandskette von n Widerständen R_{M1} bis R_{Mn}, die typischerweise aber nicht notwendigerweise identisch ausgeführt werden. Von den in diesem Beispiel n+1 Abgriffen der Widerstandskette wird durch einen analogen Multiplexer (MUX) einer der Abgriffe mit der Betriebsstromquelle (I_{ref}) verbunden. Die Busbreite des Steuerbusse (Val) des analogen Multiplexers (Mux) muss dabei ausreichend gewählt werden und dürfte typischerweise größer als der Logarithmus von n zur Basis 2 sein. Der Stromteiler, die Stromquelle und die Transistoren (T₁, T₂) bilden eine erfindungsgemäße Differenzstufe.

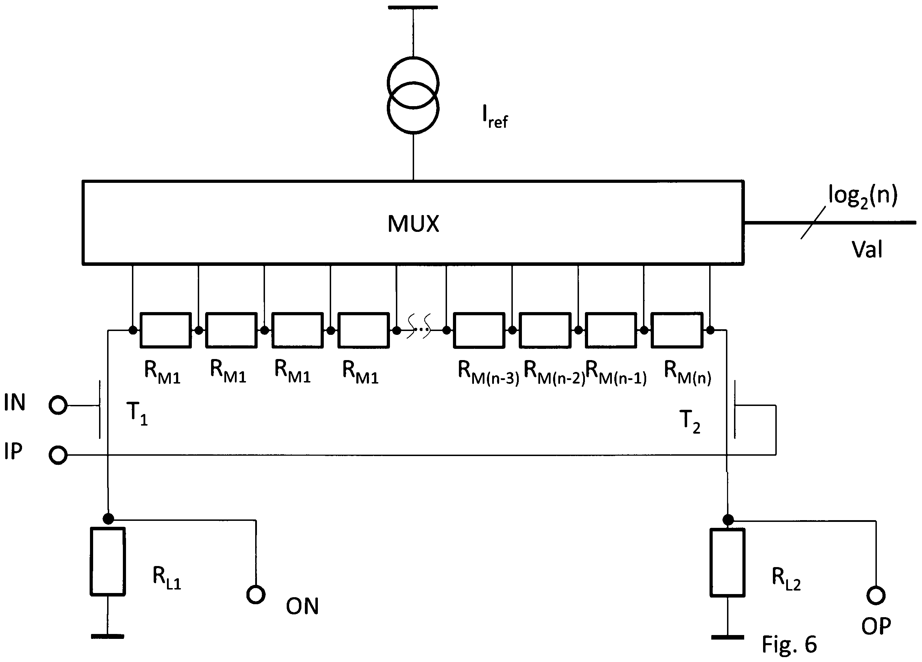

Figur 6 zeigt die Differenzstufe aus Figur 5 mit zwei Arbeitswiderständen (R_{L1}, R_{L2}). Es ist offensichtlich, dass die Stromteilerwiderstände (R_{M1} bis R_{Mn}) zu einer unterschiedlichen Stromgegenkopplung für die beiden Zweige des Differenzverstärkers führen. Diese unterschiedliche Stromgegenkopplung wird durch das Steuersignal (Val) eingestellt. In diesem Beispiel sind zwei beispielhafte Ausgänge (ON, OP) gezeigt.

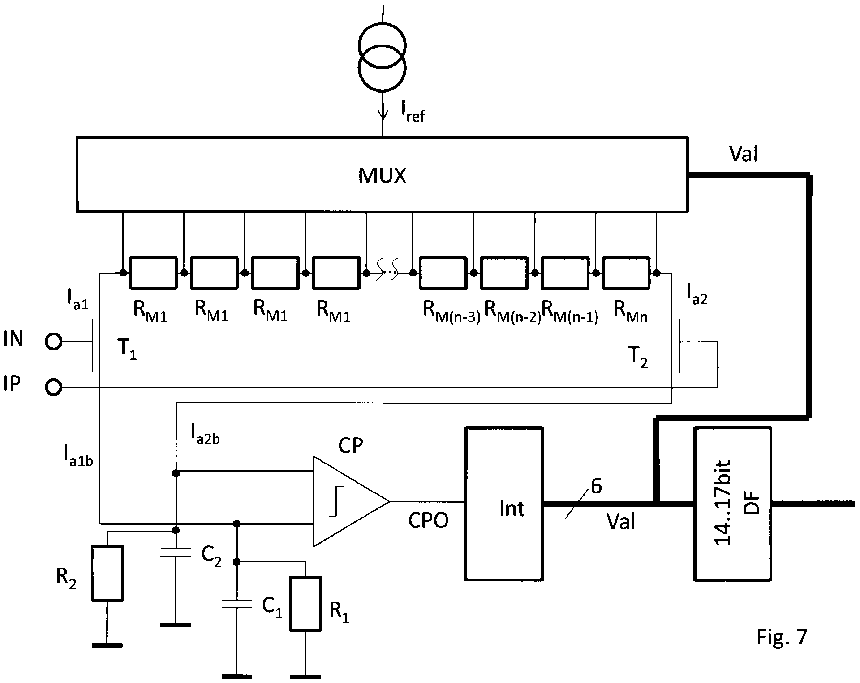

Figur 7 zeigt die Differenzstufe aus Figur 5 als Teil einer Konstruktion entsprechend Figur 3. Anstelle der Arbeitswiderstände (R_{L1}, R_{L2}) aus Figur 6 sind je ein Kondensator (C₁, C₂) parallelgeschaltet mit einem Arbeitswiderstand (R₁, R₂) eingesetzt. An den Anschlüssen IN und IP wird der passive Infrarotsensor (PIR) entsprechend den Figuren 1 und 2 angeschlossen.

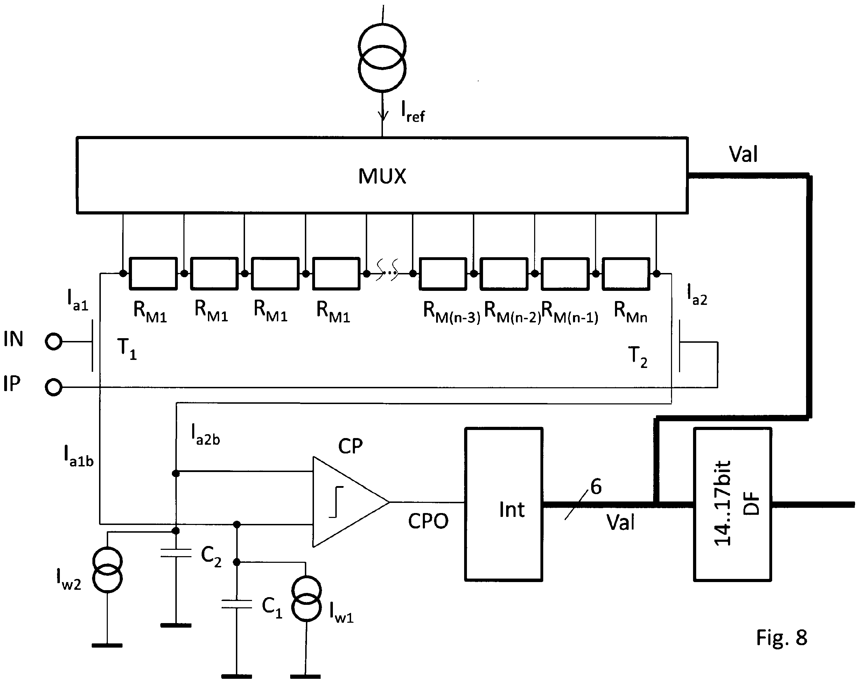

Figur 8 entspricht Figur 7 mit dem Unterschied, dass die Widerstände (R₁, R₂) durch reale Stromquellen (I_{W1}, I_{W2}) ersetzt sind, was insofern von Vorteil ist, als die Stromquellen (I_{W1}, I_{W2}) einen erhöhten differentiellen Widerstand aufweisen. Bei der Realisierung als integrierte Halbleiterschaltung stellt diese Konstruktion eine gegen parametrische Schwankungen robuste Lösung dar. Die Konstruktion ist sehr einfach und verbraucht aus diesem Grund nur sehr wenig Strom. Dabei weist sie gleichzeitig einen sehr hohen Eingangswiderstand auf. Da die Source-Anschlüsse durch die Gegenkopplung über den Stromteiler den jeweiligen Gate-Spannungen (im Mittel) folgen, schwanken die Gate-Source-Spannungen nicht. Daher sind die komplexen Eingangsimpedanzen sehr hoch. Die Gate-Source-Kapazitäten müssen nicht wesentlich umgeladen werden. Das Quantisierungsrauschen des Analog-zu-Digital-Wandlers wird mit steigender Anzahl n der Widerstände R_{Mi} geringer. Die zuvor genannten Punkte stellen wesentliche Vorteile der Erfindung gegenüber dem Stand der Technik dar.

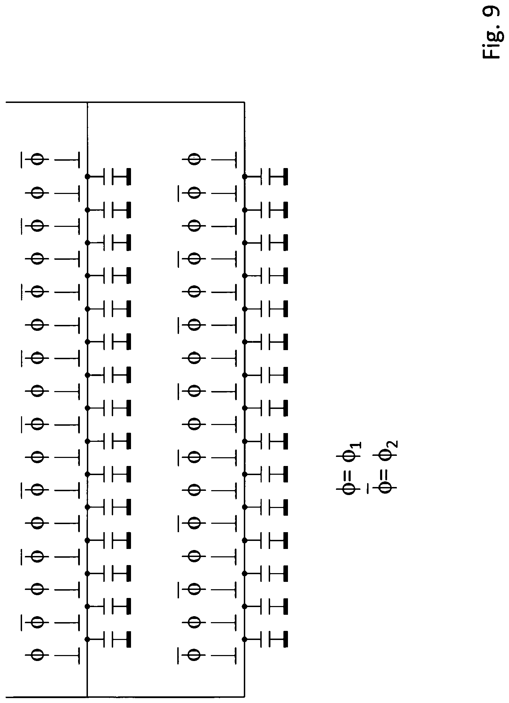

Figur 9 zeigt eine mögliche Realisierung der Entladeschaltung R_{G} aus Figur 1 bzw. der Entladewiderstände (R_{dis_1}, R_{dis_2}) in Figur 2. Diese Widerstände müssen einen relativ hohen Widerstandswert aufweisen und sollten typischerweise möglichst gleich sein. Die in dieser Figur 8 gezeigte Switch-Capacitor-Realisierung arbeitet mit Transfergattern, die wechselweise mit einem von zwei nicht überlappenden Takten (φ₁, φ₂) geschaltet werden. Abgesehen von der Nichtüberlappung ist der eine Takt der inverse des anderen Taktes. Die Speicherkapazitäten befördern dabei jeweils eine gewisse Ladungsmenge mit jedem Halbtakt um einen Knoten weiter. Figur 9 zeigt zwei Stränge. Die Stränge werden um jeweils einen Halbtakt versetzt betrieben. Hierdurch kommt es zu einem kontinuierlichen Ladungsabfluss. Werden die Takte abgeschaltet, was insbesondere in den Messphasen vorzugsweise der Fall ist, so fließt kein Strom mehr. Der so gebildete Arbeitswiderstand wird hochohmig. Wird der Takt der Entladung als von der Eingangsspannung abhängig gewählt, so kann die Entladung beispielsweise so gesteuert werden, dass sie bei größeren Eingangsspannungsdifferenzen größer und bei kleineren Eingangsspannungsdifferenzen kleiner ist und in einem vorgebbaren Bereich verschwindet.

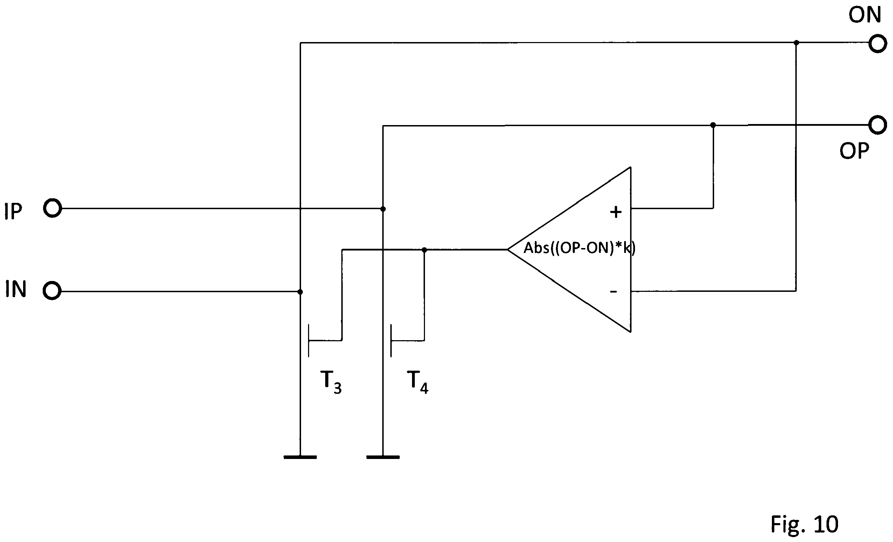

Figur 10 zeigt ein weiteres Beispiel eines Entladenetzwerks R_{G} als aktives Netzwerk. Die Transistoren T₃ und T₄ werden in Abhängigkeit von der Differenz der Eingangsspannung zwischen IP und IN leitend geschaltet. Der Differenzverstärker bildet dabei den Betrag der Differenz an seinen Eingängen OP und ON und öffnet die Transistoren T₃ und T₄ entsprechend einer vorgegebenen Funktion in Abhängigkeit von diesem Differenzbetrag. Da die Kennlinie der Transistoren nicht linear ist, führt dies bei einem verschwindenden Differenzbetrag der Eingangsspannung zwischen IP und IN zu einem verschwindenden Leitwert der Transistoren T₃ und T₄.

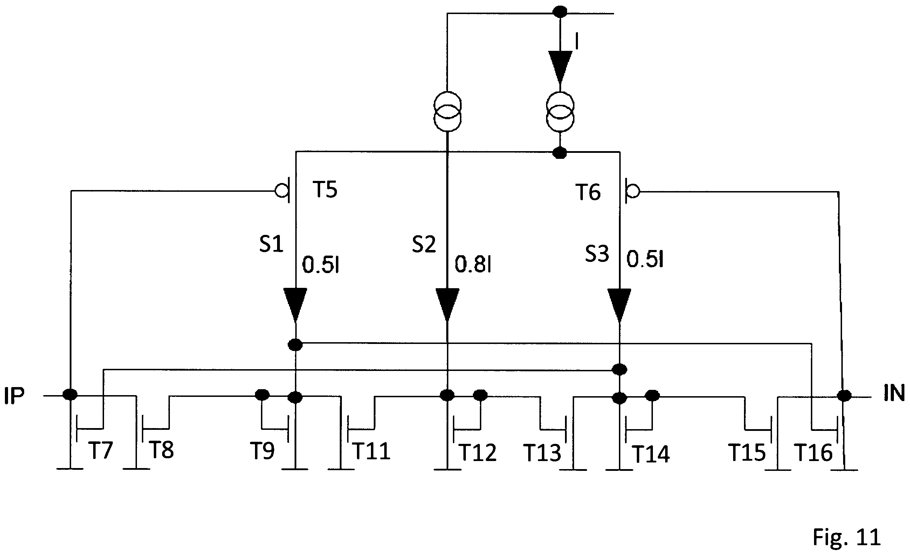

Figur 11 zeigt eine weitere mögliche Implementierung eines Entladenetzwerkes R_{G}. Eine erste Stromquelle speist mit dem Strom I jeweils zur Hälfte die MOS-Dioden T9 und T14, bei denen es sich um als Dioden beschaltete Transistoren handelt. Der Strom durch die MOS-Diode T14 wird durch den Transistor T13 vermindert. Der Strom durch die MOS-Diode T9 wird durch den Transistor T11 vermindert. Eine zweite Stromquelle liefert einen Strom, der typischerweise 80% des Wertes des Stroms der ersten Stromquelle beträgt.
   Da der Transistor T11 mit der MOS-Diode T12 einen Stromspiegel bildet und der Transistor T13 mit der gleichen MOS-Diode T12 einen Stromspiegel bildet, fließt ein auf typischerweise 80% des Stromes I bezogener Offsetstrom von den Strömen durch den Transistor T9 bzw. durch den Transistor T14.
   Sind die Eingänge IP und IN ungleich vorgespannt, so führt dies zu einer unausgeglichenen Stromaufteilung durch die Differenzstufe aus den Transistoren T5 und T6. Dies wirkt sich dann dahingehend aus, dass zusätzlicher Strom durch die MOS-Dioden T9 oder T14 fließen kann, was zu einer Öffnung der Transistoren T7 und T15 oder T8 und T16 führt und somit zu einer Entladung der Eingangsknoten IP und IN.

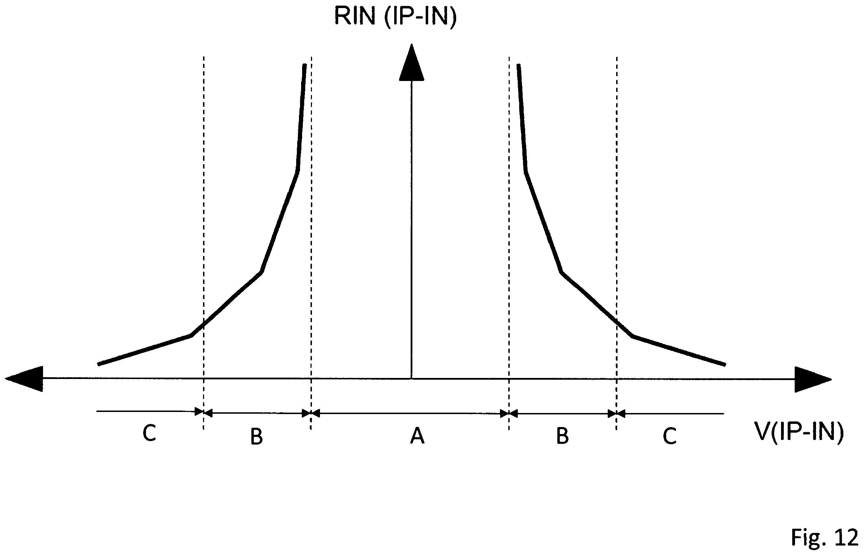

Figur 12 zeigt eine beispielhafte Entladewiderstandskennlinie einer Schaltung gemäß Figur 11. Durch geeignete Wahl der Stromspiegel- und Transistorverhältnisse kann erreicht werden, dass die Kennlinie des Eingangswiderstands einen extrem hochohmigen Bereich A, in dem der Eingangswiderstand praktisch nur vom Leckstrom der Schaltung bestimmt wird, und einen Bereich B, in dem eine Spannungsbegrenzung einsetzt, und einen Bereich C aufweist, in dem der Eingangswiderstand sehr niederohmig ist.

Die beiden Anschlüsse werden somit durch diese elektrische Schaltungsanordnung entladen, deren Äquivalentwiderstand bei einem Arbeitspunkt im Bereich A signifikant größer ist als bei Arbeitspunkt in den Bereichen B oder C.

Dies ermöglicht es, einen passiven Infrarot-Detektor so zu betreiben, dass die elektrischen Anschlüsse durch einen Strompfad entladen werden, wenn die Spannung außerhalb eines vorbestimmten Bereiches A liegt. Dabei hängt der Entladestrom durch diese Schaltung von der Eingangsspannung zwischen den elektrischen Anschlüssen IP und IN ab. In dem durch die Dimensionierungen vorgegebenen Bereich A der Eingangsspannung verschwindet der Entladestrom bis auf den Leckstrom der Transistoren. Dabei steigt der Entladestrom mit steigendem Betragsabstand der Eingangsspannung außerhalb dieses Bereiches A an. Der Eingangswiderstand RIN(IP-IN) hängt von der Differenzspannung V(IP-IN) zwischen den Eingängen IP und IN des Netzwerks R_{G} ab. Der hier betrachtete Eingangswiderstand kann dabei sowohl als zwischen den Anschlüssen IP und IN befindlich angenommen werden als auch zwischen einem Anschluss IP oder IN auf der einen und dem Bezugspotenzial, beispielsweise Masse, auf der anderen Seite. Das Widerstandsverhalten sollte vorzugsweise in jedem dieser beiden Betrachtungsfälle ähnlich demjenigen gemäß Figur 12 sein.

**Bezugszeichenliste**

| | |
|---|---|
| A | Spannungsbereich, in dem das Entladenetzwerk hochohmig ist |
| ADC | Analog zu Digital Wandler |
| B | Spannungsbereich, in dem das Entladenetzwerk eine mittlere Leitfähigkeit aufweist |
| C | Spannungsbereich, in dem das Entladenetzwerk eine höhere Leitfähigkeit aufweist |
| C₁ | Erste Kapazität |
| C_{1b} | Erstes integrierendes Filter (dritte Kapazität) |
| C₂ | Zweite Kapazität |
| CP | Komparator |
| CP_{b} | Komparator |
| CPO | Komparatorausgang |
| C_{PIR} | Parasitäre Kapazität des PIR-Sensors , |
| CS | Stromausgang des Differenz-Transconduktanz-Verstärkers |
| DAC | Digital-zu-Analog-Converter |
| DF | Nachgeschaltetes digitales Filter |
| I₁ | Weitere Stromquelle |
| I₂ | Stromquelle |
| Iₐ₁ | Erster Stromteilerausgang |
| Iₐ₂ | Zweiter Stromteilerausgang |
| IN | Erster Anschluss für den PIR Sensor |
| Int | Integrierendes Filter (im einfachsten Fall ein Auf-/Ab-Zähler) |
| Int_{b} | Integrierendes Filter (im einfachsten Fall ein Auf-/Ab-Zähler) |
| IN | Zweiter Anschluss für den PIR-Sensor |
| IN_{FB} | Abgriff an einer Widerstandskaskade (R_{FB}) aus einzelnen Widerständen |
| I_{PIR} | Stromquelle des Ersatzschaltbildes des PIR-Sensors |
| I_{ref} | Referenzstromquelle |
| IW₁ | Erste, als Arbeitswiderstand benutzte Stromquelle |
| IW₂ | Zweite, als Arbeitswiderstand benutzte Stromquelle |
| | |
| | |
| MUX | Analoger 1:(n-1) oder 1:n oder 1:(n+1) Multiplexer. Dabei hat n vorzugsweise einen Wert größer als drei und/oder 4. Besonders vorteilhaft sind Werte von n=(2^{m}-2) mit m>2 oder m>3. Im vorliegenden Beispiel ist m=6 gewählt. |
| ON | Erster Ausgang der Differenzstufe |
| OP | Zweiter Ausgang der Differenzstufe |
| Out | Ausgangsbus des digitalen Filters DF (=nachgeschaltetes Filter DF) |
| φ₁ | Erster Takt des SC-Netzwerks zur Bildung eines Entladewiderstands |
| φ₂ | Zweiter Takt des SC-Netzwerks zur Bildung eines Entladewiderstands. Der Takt ist im Wesentlichen invers zu φ₁ und überlappt sich mit φ₁ nicht. |
| PIR | PIR-Sensor |
| R₁ | Erster Arbeitswiderstand |
| R₂ | Zweiter Arbeitswiderstand |
| R_{dis_1} | Erster ungünstiger Entladewiderstand im Stand der Technik. Dieser führt zu einer Belastung des Ausgangs IP und zu einer Reduzierung des Ausgangssignals. In der erfindungsgemäßen Vorrichtung wird dieser Widerstand moduliert. |
| R_{dis_2} | Zweiter ungünstiger Entladewiderstand im Stand der Technik. Dieser führt zu einer Belastung des Ausgangs IN und zu einer Reduzierung des Ausgangssignals. In der erfindungsgemäßen Vorrichtung wird dieser Widerstand moduliert. |
| R_{FB} | Widerstandskaskade aus einzelnen Widerständen. Ein Steuersignal (Val) steuert den Abgriff des Ausgangssignals IN_{FB}. Die Widerstandskaskade verhält sich also wie ein durch die Größe Val gesteuertes Potentiometer. Die Realisierung erfolgt ähnlich der Realisierung des Stromteilers aus Multiplexer MUX und Widerstandskaskade R_{M1} bis R_{Mn}. |
| R_{G} | Entladenetzwerk. Diese Entladenetzwerk verhindert eine Aufladung des PIR-Sensors sowohl gegen Masse als auch der Anschlüsse des PIR-Sensors gegeneinander. |
| RIN(IP-IN) | Von der Differenzspannung V(IP-IN) zwischen den Eingängen IP und IN abhängiger Eingangswiderstand des Netzwerks R_{G}. |
| R_{L1} | Erster Arbeitswiderstand |
| R_{L2} | Zweiter Arbeitswiderstand |
| R_{M} | Widerstand des Stromteilers. Es handelt sich um den Summenwert der Widerstandskette R_{M1} bis P_{Mn} aus n Widerständen. |
| R_{M1} bis R_{Mn} | Widerstände der Widerstandskette aus n Widerständen des Stromteiles der erfindungsgemäßen Differenzstufe |
| R_{PIR} | Innenwiderstand des PIR-Sensors PIR, der parallel zu den Ausgängen des PIR Sensors liegt (siehe Fig. 1) |
| R_{PIR_C} | Serienwiderstand der parasitären Kapazität C_{PIR}. |
| S_{b} | Erster Knoten |
| T | ADC Ausgang mit typischerweise geringerer Bit-breite als der Bus Out |
| T₁ | Erster Transistor der Differenzstufe |
| T₂ | Zweiter Transistor der Differenzstufe |
| T₃ | Dritter Transistor |
| T₄ | Vierter Transistor |
| T5 bis T16 | Transistoren eines beispielhaften weiteren Entladenetzwerks. |
| Val | Steuereingang des Multiplexers MUX |
| V(IP-IN) | Spannung zwischen den Ausgängen des PIR-Sensors und damit zwischen den Eingängen des Entladenetzwerks R_{G} |
| V_{ref} | Referenzspannung |

## Patentansprüche

1. Vorrichtung zum Betreiben eines als Zweipol ausgeführten, passiven Infrarot-Detektors (PIR), wobei die Vorrichtung aufweist
- einen ersten und einen zweiten Eingangstransistor (T₁, T₂) mit jeweils einem Steuereingang, einem ersten Kontakt und einem zweiten Kontakt,
- einen steuerbaren Stromteiler (MUX, Rₘᵢ bis Rₘₙ) mit einem Steuereingang (Val) und zwei Stromteilerausgängen (Iₐ₁, Iₐ₂),
- eine Referenzstromquelle (I_{ref}) und
- einen Komparator (CP),
**dadurch gekennzeichnet, dass** die Vorrichtung weiter aufweist
- ein Entladenetzwerk (R_{G}),
- zwei integrierende Filter und/oder zwei Kapazitäten (C₁, C₂) und
- ein digitales integrierendes Filter (Int),
wobei
- jeder der Ausgänge des besagten passiven Infrarot-Detektors (PIR) mit dem Entladenetzwerk (R_{G}) verbunden ist,
- jeder der Ausgänge des besagten passiven Infrarot-Detektors (PIR) mit dem Steuereingang eines jeweils zugeordneten Eingangstransistors der beiden Eingangstransistoren (T₁, T₂) verbunden ist,
- jeweils der erste Kontakt jedes dieser Eingangstransistoren (T₁, T₂) mit einem der Stromteilerausgänge (Iₐ₁, Iₐ₂) des steuerbaren Stromteilers (MUX, Rₘᵢ bis *Rₘₙ)* verbunden ist,
- der Stromteiler (MUX, Rₘᵢ bis Rₘₙ) einen Strom der Referenzstromquelle (I_{ref}) in Abhängigkeit von einem Eingangswert am Steuereingang (Val) auf die Stromteilerausgänge (Iₐ₁, Iₐ₂) aufteilt,
- die zweiten Kontakte der Transistoren (T₁, T₂) jeweils mit einem der zwei integrierenden Filter und/oder einer der zwei Kapazitäten (C₁, C₂) verbunden sind,
- die Ausgangswerte dieser integrierenden Filter und/oder Kapazitäten (C₁, C₂) durch den Komparator (CP) miteinander verglichen werden,
- ein Komparatorausgangssignal (CPO) dieses Komparators (CP) dem digitalen integrierenden Filter (Int) als Eingangssignal zugeführt wird und
- der Steuereingang (Val) des Stromteilers (MUX, Rmi bis Rte), der den Strom der Referenzstromquelle (I_{ref}) aufteilt, direkt oder indirekt vom Zahlenwert eines Ausgangssignals des digitalen integrierenden Filters (Int) abhängt.

2. Vorrichtung nach Anspruch 1, **dadurch gekennzeichnet, dass** das digitale integrierende Filter ein Aufwärts-/Abwärtszähler (Int, Int_{b}) ist, dass das Komparatorausgangssignal (CPO) des Komparators (CP) mindestens diesen Auswärts-/Abwärtszähler (Int, Int_{b}) hinsichtlich seiner Zählrichtung steuert und dass der Aufwärts-/Abwärtszähler (Int, Int_{b}) in vorgegebenen und/oder programmierbaren Zeitabständen seinen Zahlenwert inkrementiert oder dekrementiert.

3. Vorrichtung nach Anspruch 1 oder 2, **dadurch gekennzeichnet, dass** dem digitalen integrierenden Filter ein weiteres digitales Filter (DF) nachgeordnet ist.

## Claims

1. Device for operating a passive infrared detector (PIR) of the two-pole type, said device comprising
- a first and a second input transistor (T₁, T₂) each comprising a control input, a first contact and a second contact,
- a controllable current divider (MUX, Rₘᵢ to Rₘₙ) comprising a control input (Val) and two current divider outputs (Iₐ₁, Iₐ₂),
- a reference current source (I_{ref}) and
- a comparator (CP),
**characterized in that** said device further comprises
- a discharge network (R_{G}),
- two integrating filters and/or two capacitors (C₁, C₂) and
- a digital integrating filter (Int),
wherein
- each of the outputs of said passive infrared detector (PIR) is connected to the discharge network (R_{G}),
- each of the outputs of said passive infrared detector (PIR) is connected to the control input of a respectively assigned input transistor of the two input transistors (T₁, T₂),
- respectively the first contact of each of said input transistors (T₁, T₂) is connected to one of the current divider outputs (Iₐ₁, Iₐ₂) of the controllable current divider (MUX, Rₘᵢ to Rₘₙ),
- the current divider (MUX, Rₘᵢ to Rₘₙ) is operative to divide a current of the reference current source (I_{ref}) among the current divider outputs (Iₐ₁, Iₐ₂) in dependence on an input value at the control input (Val),
- the second contacts of the transistors (T₁, T₂) are respectively connected to one of the two integrating filters and/or two one of the two capacitors (C₁, C₂),
- the output values of said integrating filters and/or said capacitors (C₁, C₂) are compared to each other by the comparator (CP),
- a comparator output signal (CPO) of said comparator (CP) is supplied to the digital integrating filter (Int) as an input signal, and
- the control input (Val) of the current divider (MUX, Rₘᵢ to Rₘₙ) which divides the current of the reference current source (I_{ref}) is directly or indirectly dependent on the numerical value of an output signal of the digital integrating filter (Int).

2. Device according to claim 1, **characterized in that** the digital integrating filter is an upward/downward counter (Int, Int_{b}), that the comparator output signal (CPO) of the comparator (CP) is operative to control at least said upward/downward counter (Int, Int_{b}) with respect to its counting direction, and that the upward/downward counter (Int, Int_{b}) is operative to increment or decrement its count in predetermined and/or programmable time intervals.

3. Device according to claim 1 or 2, **characterized in that** the digital integrating filter has a further digital filter (DF) arranged downstream of it.

## Revendications

1. Dispositif destiné au fonctionnement d'un détecteur infrarouge passif (PIR) réalisé comme dipôle, dans lequel le dispositif comprend
- un premier et un deuxième transistor d'entrée (T₁, T₂) dotés chacun d'une entrée de commande, d'un premier contact et d'un deuxième contact,
- un diviseur de courant commandable (MUX, Rₘᵢ à Rₘₙ) doté d'une entrée de commande (Val) et de deux sorties de diviseur de courant (Iₐ₁, Iₐ₂),
- une source de courant de référence (I_{ref}) et
- un comparateur (CP)
**caractérisé en ce que** le dispositif comprend en outre
- un réseau de décharge (R_{G}),
- deux filtres intégrateurs et/ou deux capacitances (C₁, C₂) et
- un filtre intégrateur numérique (Int),
dans lequel
- chacune des sorties dudit détecteur infrarouge passif (PIR) est connectée au réseau de décharge (R_{G}),
- chacune des sorties dudit détecteur infrarouge passif (PIR) est connectée à l'entrée de commande d'un transistor d'entrée respectivement ordonné parmi les deux transistors d'entrée (T₁, T₂),
- le premier contact respectif de chacun de ces transistors d'entrée (T₁, T₂) est connecté à une des sorties de diviseur de courant (Iₐ₁, Iₐ₂) du diviseur de courant commandable (MUX, Rₘᵢ à Rₘₙ),
- le diviseur de courant commandable (MUX, Rₘᵢ à Rₘₙ) répartit un courant de la source de courant de référence (I_{ref}) sur les sorties de diviseur de courant (Iₐ₁, Iₐ₂) en fonction d'une valeur d'entrée à l'entrée de courant (Val),
- les deuxièmes contacts des transistors (T₁, T₂) sont respectivement connectés avec un deux filtres intégrateurs et/ou une des deux capacitances (C₁, C₂),
- les valeurs de sortie de ces filtres intégrateurs et/ou capacitances (C₁, C₂) sont comparées l'une à l'autre par le biais du comparateur (CP),
- un signal de sortie de ce comparateur (CPO) du comparateur (CP) est conduit au filtre intégrateur numérique (Int) en tant que signal d'entrée,
- l'entrée de commande (Val) du diviseur de courant commandable (MUX, Rₘᵢ à Rₜₑ), qui répartit le courant de la source de courant de référence (I_{ref}), dépend directement ou indirectement de la valeur numérique d'un signal de sortie du filtre intégrateur numérique (Int).

2. Dispositif selon la revendication 1, **caractérisé en ce que** le filtre intégrateur numérique est un compteur/décompteur (Int, Int_{b}), que le signal de sortie du comparateur (CPO) du comparateur (CP) commande au moins ce compteur/décompteur (Int, Int_{b}) au regard de son sens de comptage et **en ce que** le compteur/décompteur (Int, Int_{b}) incrémente ou décrémente sa valeur numérique à des intervalles prédéfinis et/ou programmables.

3. Dispositif selon la revendication 1 ou 2, **caractérisé en ce qu'**un filtre numérique (DF) supplémentaire est ordonné au filtre intégrateur numérique.
